# EUROPÄISCHE PATENTANMELDUNG

(11) **EP 1 772 415 A2**
(43) Veröffentlichungstag der Anmeldung: **11.04.2007**
(21) Anmeldenummer: 06019859.5
(22) Anmeldetag: 22.09.2006
(51) Int. Cl.: B66C 23/78

(54) **Abstützeinrichtung für einen Mobilkran**

(30) Priorität: 04.10.2005 DE 20515516 U
(71) Anmelder: Liebherr-Werk Ehingen GmbH, 89584 Ehingen/Donau (DE)
(72) Erfinder: Morath, Erwin, 89584 Lauterach (DE)
(74) Vertreter: Laufhütte, Dieter

(57) **Zusammenfassung**

Die Erfindung betrifft eine Abstützeinrichtung für einen Mobilkran mit einem Teleskopausleger, der einen Anlenkschuss und zumindest einen daraus austeleskopierbaren Teleskopschuss aufweist, mit mehreren ausfahrbare Abstützfüße enthaltenden Abstützholmen, die jeweils von einer eingefahrenen Transportposition in eine ausgefahrene Arbeitsposition und umgekehrt bewegbar sind, wobei die Abstützeinrichtung als Positionserkennungseinrichtung zumindest einen Signalgeber in Form eines induktiv wirkenden Transponders, eine Empfangseinheit zur Erfassung der Position des Signalgebers, eine Steuereinrichtung zur Ansteuerung in Abhängigkeit eines Signals der Empfangseinheit, sowie eine Signalübertragungseinrichtung in Form eines Datenbusses zur Übertragung der Signaldaten von der Empfangseinheit zur Steuereinrichtung aufweist, wobei an jedem Abstützfuß an vorbestimmten Positionen Signalgeber angeordnet sind, so dass durch die jeweilige Empfangseinheit die Position des horizontal zum Fahrzeug ausfahrbaren Abstützholmes zugeordnet werden kann.

## Beschreibung

Die Erfindung betrifft eine Abstützeinrichtung für einen Mobilkran mit einem Teleskopausleger, der einen Anlenkschuss und zumindest einen daraus austeleskopierbaren Teleskopschuss aufweist, mit mehreren ausfahrbare Abstützfüße enthaltenden Abstützholmen, die jeweils von einer eingefahrenen Transportposition in eine ausgefahrene Arbeitsposition und umgekehrt bewegbar sind.

Derartige Abstützeinrichtungen für Mobilkräne dienen dazu, die Aufstandsfläche unter den Kranabstützungen zu vergrößern. Grundsätzlich wird nicht das Kranfahrgestell des Mobilkrans zur Abstützung herangezogen. Dieses dient lediglich für den Transport des Kranes und hängt während der Arbeit des Mobilkranes frei über dem Boden. Den sicheren Stand erhält der Kran dagegen durch die große Fläche, die aus der ausgefahrenen Arbeitsposition der Abstützeinrichtung resultiert.

In der Regel besteht die Abstützeinrichtung aus austeleskopierbaren Abstützholmen, die in einer Transportposition in der Regel an dem Unterwagen des Mobilkrans anklappbar sind. In ihrer Arbeitsposition werden sie entsprechend ausgeschwenkt und je nach notwendiger Abstützung und je nach den Platzbedingungen in der Umgebung ausgefahren.

Dabei ist es für ein sicheres Arbeiten des Mobilkrans wichtig, dass die Abstützeinrichtung richtig positioniert ist, also auf die gewünschte Länge ausgefahren ist und dass die Abstützfüße sich auch tatsächlich auf dem Untergrund abstützen.

Aufgabe der vorliegenden Erfindung ist es, eine Abstützeinrichtung der eingangs angegebenen Art derart weiterzubilden, dass das Erreichen der Arbeitsposition der Abstützeinrichtung sicher überprüft werden kann.

Erfindungsgemäß wird diese Aufgabe durch die Kombination der Merkmale des Anspruchs 1 gelöst. So weist die gattungsgemäße Abstützeinrichtung gemäß dem Oberbegriff des Anspruchs 1 eine Positionserkennungseinrichtung auf, die zumindest einen Signalgeber in Form eines induktiv wirkenden Transponders, eine Empfangseinrichtung zur Erfassung der Position des Signalgebers, eine Steuereinrichtung zur Ansteuerung in Abhängigkeit eines Signals der Empfangseinheit, sowie eine Signalübertragungseinrichtung in Form eines Datenbusses zur Übertragung der Signaldaten von der Empfangseinheit zur Steuereinrichtung auf. Erfindungsgemäß ist an jedem Abstützfuß an vorbestimmter Position ein Signalgeber angeordnet, so dass durch die jeweilige Empfangseinheit die Position des horizontal zum Fahrzeug ausfahrbaren Abstützholmes zugeordnet werden kann.

Mit der erfindungsgemäßen Abstützeinrichtung kann sichergestellt werden, dass der Betrieb des Mobilkrans erst dann aufgenommen wird, wenn die Abstützeinrichtung in eine korrekte Position ausgefahren ist. Die Positionserkennungseinrichtung ermittelt dabei die Position durch den entsprechenden Transponder und die zugehörige Empfangseinheit und übermittelt die jeweils aufgenommenen Signale über den Datenbus zur Steuereinrichtung des Mobilkrans. Durch Übermittlung des entsprechenden Signals nach Erreichen der gewünschten Position kann ein Freischaltsignal erzeugt werden, da diese die Voraussetzung für die Aktivierung des Teleskopauslegers ist.

Bevorzugte Ausgestaltungen der Erfindung ergeben sich aus den sich an den Hauptanspruch anschließenden Unteransprüchen. Demnach können mehrere Abstützholme teleskopartig ineinander schiebbar sein, wobei an jedem Abstützholm zumindest ein Transponder angeordnet ist. Somit lässt sich hier automatisch genau bestimmen, wie weit der jeweilige Abstützholm ausgefahren ist.

Weiterhin kann jeweils an dem Abstützholm, in den ein im Durchmesser kleinerer Abstützholm einfahrbar ist, eine Empfangseinheit angebaut sein. So mißt jeweils der größere Abstützholm die Position des in ihn einteleskopierbaren bzw. aus ihm heraus austeleskopierbaren Abstützholm.

Schließlich ist es gemäß einer weiteren Ausbildung der Erfindung vorgesehen, dass an dem Abstützholm, an dem der Abstützfuß ausfahrbar angeordnet ist, eine Empfangseinheit vorgesehen ist, die die Position des vertikal ausfahrbaren Abstützfußes bestimmt.

An jedem Abstützfuß kann zusätzlich ein Druckschalter angeordnet sein, über den die Reaktionskraft des Abstützfußes meßbar ist. Hierdurch kann also bestimmt werden, ob sich sämtliche Abstützfüße auf dem Untergrund abstützen, so dass der Mobilkran sicher arbeiten kann.

Weitere Merkmale, Einzelheiten und Vorteile der Erfindung werden anhand eines in der Zeichnung dargestellten Ausführungsbeispieles näher erläutert. Es zeigen:
- Figur 1:: eine schematische perspektivische Ansicht einer Abstützeinrichtung gemäß einer Ausgestaltung der vorliegenden Erfindung,
- Figur 2:: einen Längsschnitt durch die Abstützeinrichtung gemäß einer gegenüber der in Figur 1 dargestellten Abstützeinrichtung modifizierten Ausführungsform,
- Figur 3:: eine schematische Ansicht des Zusammenwirkens von Transponder und Empfangseinrichtung in der vorliegenden Erfindung,
- Figur 4:: eine teilweise Schnittansicht entsprechend derjenigen gemäß Figur 2,
- Figur 5:: eine perspektivische Ansicht des Gegenstands der Figur 4,
- Figur 6:: ein Schnitt entlang der Schnittlinie A-A in Figur 4 und
- Figur 7:: ein vergrößertes Detail gemäß Figur 5.

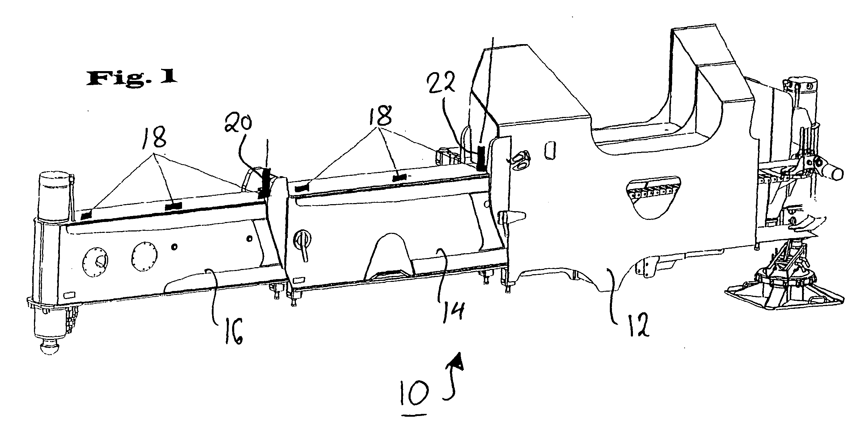

Aus der Figur 1 ist der grundsätzliche Aufbau der Abstützeinrichtung 10 für einen hier nicht näher im Detail dargestellten Mobilkran gezeigt. Die Abstützeinrichtung 10 besteht aus ineinander teleskopierbaren Abstützholmen 12, 14 und 16. In einer Transportstellung sind die im Durchmesser kleineren Holme 16 und 14 jeweils in die nächst größeren Holme 14 und 12 eingezogen. In dieser Position ist dann der Abstützholm 12 an den Unterwagen des Mobilkrans angeklappt, was in der vorliegenden Figur 1 nicht dargestellt ist. In der Darstellung gemäß Figur 1 sind die jeweiligen Abstützholme 12, 14 und 16 in austeleskopierter Position gezeigt.

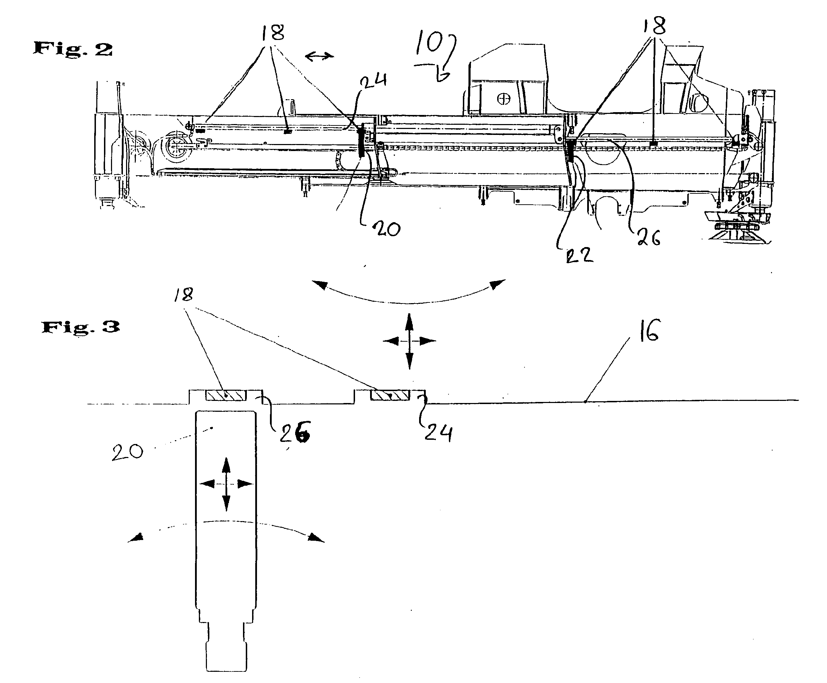

Gemäß der vorliegenden Erfindung weisen nun die Abstützholme 14 und 16 jeweils drei Signalgeber in Form von Transpondern 18 auf, wobei diese Transponder 18 in gleichmäßigen Abständen auf dem Abstützholm 14 bzw. 16 angeordnet sind. Mit diesen Signalgebern wirken die Empfangseinheiten 20 und 22 zusammen, wobei die Empfangseinheit 20 auf dem Abstützholm 14 und die Empfangseinheit 22 auf dem Abstützholm 12 in entsprechender Position angeordnet sind. In der Schnittdarstellung gemäß Figur 2, die im wesentlichen der Ausführungsform gemäß Figur 1 entspricht, sind die jeweiligen Transponder 18 und die Empfangseinrichtungen in einer jeweils anderen Position angeordnet. Hier sind sie nicht an der äußeren Oberfläche des jeweiligen Abstützholms 14 bzw. 16, sondern an jeweils teleskopierbaren Stangen 24 bzw. 26 angeordnet.

In Figur 3 ist die Einbauposition entsprechend Figur 1 nochmals dargestellt, wobei hier die äußere Oberfläche eines Abstützholms 16 dargestellt ist, in welcher Ausnehmungen 26 vorgesehen sind, die die Transponder 18 aufnehmen. Gegenüberliegend ist die Empfangseinheit 20 angeordnet. Durch die entsprechenden Pfeildarstellungen sind mögliche Bewegungsrichtungen der jeweiligen Elemente dargestellt.

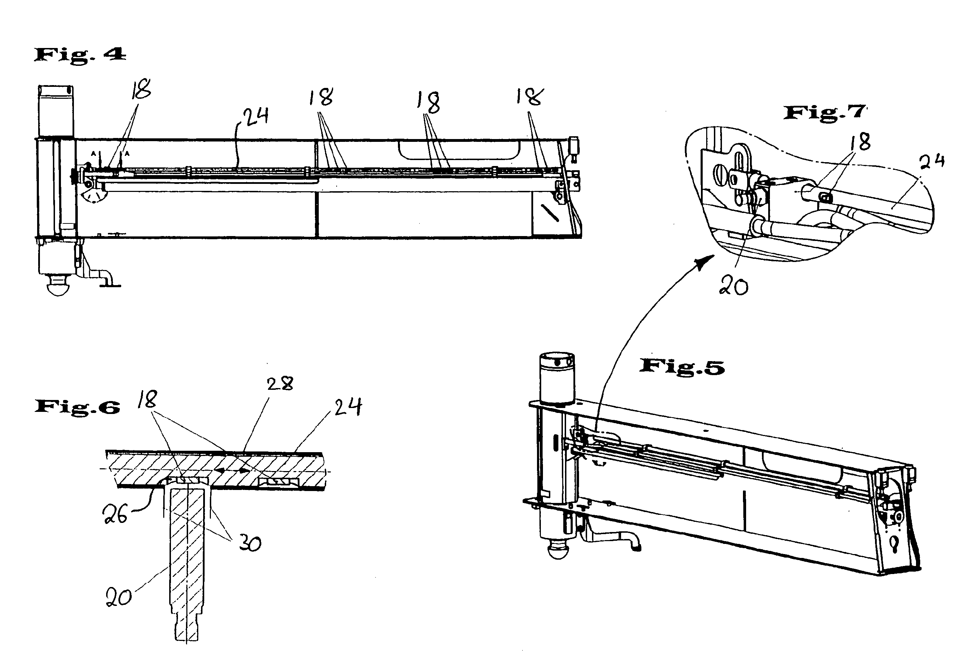

In den Figuren 4 bis 7 sind nähere konstruktive Details der Anordnung der Transponder auf entsprechenden Trägerstangen 24 wiedergegeben. Entlang der Stange 24 ist eine Reihe von Transpondern 18 angeordnet, wie sich aus der Figur 4 ergibt.

Entsprechend der Schnittdarstellung entsprechend Schnitt A-A, wie er in Figur 6 dargestellt ist, sind hier die Transponder 18 in vergrößerter Darstellung wiedergegeben, wobei diese in entsprechende Ausnehmungen 26 der Stange 24 eingesetzt sind. Die Stange 24 ist innerhalb eines Führungselements bzw. Abschirmelements 28 in Doppelpfeilrichtung hin und her bewegbar. In dem U-förmigen Führungselement bzw. Abschirmelement 28 ist ein Lesefenster 30 vorgesehen, in welchem die Empfangseinrichtung 20 sitzt. Soweit ein entsprechender Transponder 18 gegenüber der Empfangseinrichtung 20 liegt, wie in Figur 6 dargestellt, wird hier die zugehörige Position über eine hier nicht näher dargestellte Signalverarbeitung an die Steuereinrichtung zur Ansteuerung in Abhängigkeit dieses Signals weitergeleitet.

In der Detaildarstellung gemäß Figur 7, die einen Ausschnitt aus der Figur 5 vergrößert darstellt, ist die Anordnung einer Empfangseinrichtung 20 sowie der Transponder 18 und der als Trägerelement stehenden Stange 24 gezeigt.

## Patentansprüche

1. Abstützeinrichtung für einen Mobilkran mit einem Teleskopausleger, der einen Anlenkschuss und zumindest einen daraus austeleskopierbaren Teleskopschuss aufweist, mit mehreren ausfahrbare Abstützfüße enthaltenden Abstützholmen, die jeweils von einer eingefahrenen Transportposition in eine ausgefahrene Arbeitsposition und umgekehrt bewegbar sind,
**dadurch gekennzeichnet,**
**dass** die Abstützeinrichtung als Positionserkennungseinrichtung zumindest einen Signalgeber in Form eines induktiv wirkenden Transponders, eine Empfangseinheit zur Erfassung der Position des Signalgebers, eine Steuereinrichtung zur Ansteuerung in Abhängigkeit eines Signals der Empfangseinheit, sowie eine Signalübertragungseinrichtung in Form eines Datenbusses zur Übertragung der Signaldaten von der Empfangseinheit zur Steuereinrichtung aufweist, wobei an jedem Abstützfuß an vorbestimmten Positionen Signalgeber angeordnet sind, so dass durch die jeweilige Empfangseinheit die Position des horizontal zum Fahrzeug ausfahrbaren Abstützholmes zugeordnet werden kann.

2. Abstützeinrichtung nach Anspruch 1, **dadurch gekennzeichnet, dass** mehrere Abstützholme teleskopartig ineinander schiebbar sind und dass an jedem Abstützholm zumindest ein Transponder angeordnet ist.

3. Abstützeinrichtung nach Anspruch 2, **dadurch gekennzeichnet, dass** jeweils an dem Abstützholm, in den ein im Durchmesser kleinerer Abstützholm einfahrbar ist, eine Empfangseinheit aufweist.

4. Abstützeinrichtung nach einem der Ansprüche 1 bis 3, **dadurch gekennzeichnet, dass** durch eine Empfangseinheit an dem Abstützholm, an dem der Abstützfuß ausfahrbar angeordnet ist, die Position des vertikal ausfahrbaren Abstützfußes bestimmbar ist.

5. Abstützeinrichtung nach einem der vorangehenden Ansprüche, **dadurch gekennzeichnet, dass** an jedem Abstützfuß ein Druckschalter angeordnet ist, über den die Reaktionskraft des Abstützfußes meßbar ist.
